# EUROPEAN PATENT APPLICATION

(11) **EP 4 607 417 A1**
(43) Date of publication of application: **27.08.2025**
(21) Application number: 23879595.9
(22) Date of filing: 03.10.2023
(51) Int. Cl.: G06Q 10/00

(54) **CONTROL SYSTEM, CONTROL METHOD, CONTROL PROGRAM, INFORMATION PROVISION SYSTEM, INFORMATION PROVISION METHOD, AND INFORMATION PROVISION PROGRAM**

(30) Priority: 21.10.2022 JP 2022169296
(71) Applicant: Panasonic Intellectual Property Management Co., Ltd., Kadoma-shi, Osaka 571-0057 (JP)
(72) Inventor: KONDO Kenji, Kadoma-shi, Osaka 571-0057 (JP); TSUJI Kiyotaka, Kadoma-shi, Osaka 571-0057 (JP); YAMAJI Satoru, Kadoma-shi, Osaka 571-0057 (JP); OKUMURA Yasuaki, Kadoma-shi, Osaka 571-0057 (JP)
(74) Representative: Grünecker Patent- und Rechtsanwälte PartG mbB
(86) International application number: PCT/JP2023/035995
(87) International publication number: WO 2024/084948

(57) **Abstract**

A control system (10) includes an acquisition unit (121), an information processing unit (122), and an output unit (123). The acquisition unit (121) acquires dish information indicating a dish, and sensory evaluation information based on the dish information. The information processing unit (122) acquires cooking parameter information, including one or more cooking parameters, based on the acquired dish information and sensory evaluation information. The output unit (123) outputs a control signal, including the acquired cooking parameter information, to a cooking control unit (150), which controls a cooking device (100). The cooking parameter information includes a cooking parameter for increasing or decreasing a sensory evaluation value corresponding to the sensory evaluation information during a cooking process performed by the cooking device (100).

## Description

### Technical Field

The present disclosure relates to a control system and the like for controlling a cooking device.

### Background Art

PTL 1 discloses a method of providing meal menus. In this method, the computer performs a process of receiving a first keyword related to health and a process of acquiring information on a functional component related to the first keyword from a first database. In this method, the computer also performs a process of searching a second database for a meal menu using ingredients related to the acquired information on the functional component and a process of providing the retrieved meal menu to the user.

### Citation List

### Patent Literature

PTL 1: Japanese Patent Publication No. 5908359

### Summary of Invention

The present disclosure provides a control system and the like for facilitating cooking dishes that satisfy a user's taste-related preferences.

A control system according to one aspect of the present disclosure includes: an acquirer that acquires dish information indicating a dish, and sensory evaluation information based on the dish information; an information processor that acquires cooking parameter information, including one or more cooking parameters, based on the acquired dish information and sensory evaluation information; and an outputter that outputs a control signal, including the acquired cooking parameter information, to a cooking controller that controls a cooking device, wherein the cooking parameter information includes a cooking parameter for increasing or decreasing a sensory evaluation value corresponding to the sensory evaluation information during a cooking process performed by the cooking device.

This comprehensive or specific aspect may be implemented as a device, method, integrated circuit, computer program, or computer-readable recording medium, and may be implemented as any combination of a device, system, method, integrated circuit, computer program, and computer-readable recording medium. The computer-readable recording medium includes a non-volatile recording medium such as, for example, CD-ROM (Compact Disc-Read Only Memory).

According to the present disclosure, it is easy to cook a dish that satisfies a user's taste-related preferences.

### Brief Description of Drawings

[Fig. 1] Fig. 1 is a block diagram illustrating an overall configuration including a control system and an information provision system according to an embodiment.
[Fig. 2] Fig. 2 is a diagram illustrating an example of first information stored in a first database.
[Fig. 3] Fig. 3 is a diagram illustrating an example of second information stored in a second database.
[Fig. 4] Fig. 4 is a flowchart illustrating the overview of the operation of the control system according to the embodiment.
[Fig. 5] Fig. 5 is a sequence diagram illustrating the overview of the operation of each of the control system and the information provision system according to the embodiment.
[Fig. 6] Fig. 6 includes diagrams each illustrating an example of a first image displayed on a display unit.
[Fig. 7] Fig. 7 includes diagrams each illustrating a first example of a second image displayed on the display unit.
[Fig. 8] Fig. 8 is a diagram illustrating a second example of the second image displayed on the display unit.
[Fig. 9] Fig. 9 is a diagram illustrating a third example of the second image displayed on the display unit.
[Fig. 10] Fig. 10 is a diagram illustrating a first example of a third image displayed on the display unit.
[Fig. 11] Fig. 11 is a diagram illustrating a second example of the third image displayed on the display unit.
[Fig. 12] Fig. 12 is a flowchart illustrating a process of generating a trained model.
[Fig. 13] Fig. 13 is a diagram illustrating an example of evaluation items for sensory evaluation.
[Fig. 14] Fig. 14 is a diagram illustrating an example of evaluation data of sensory evaluation.
[Fig. 15] Fig. 15 includes diagrams each illustrating an example of a trained model.
[Fig. 16] Fig. 16 includes diagrams each illustrating an example of a method of determining one or more cooking parameters.
[Fig. 17] Fig. 17 is a block diagram illustrating an overall configuration including a control system and an information provision system according to a modification of the embodiment.
[Fig. 18] Fig. 18 is a diagram illustrating an example of third information stored in a third database.
[Fig. 19] Fig. 19 includes diagrams each illustrating an example of a method of determining one or more cooking parameters.

### Description of Embodiments

### (Underlying Knowledge Forming Basis of the Present Disclosure)

First, the inventors' point of view will be described below.

Conventionally, as disclosed in PTL 1, there is a known method of providing a user with a dish containing components (chemical components) that can have a positive effect on health, corresponding to the user's health-related preferences. However, this method has the problem that it is difficult to satisfy the user's taste-related preferences. For example, if this method provides a low-salt dish that satisfies the user's health-related preferences, the user may feel that the dish is lacking in flavor.

In light of the above, the inventors have come to create the present disclosure.

A control system according to one aspect of the present disclosure includes: an acquirer that acquires dish information indicating a dish, and sensory evaluation information based on the dish information; an information processor that acquires cooking parameter information, including one or more cooking parameters, based on the acquired dish information and sensory evaluation information; and an outputter that outputs a control signal, including the acquired cooking parameter information, to a cooking controller that controls a cooking device, wherein the cooking parameter information includes a cooking parameter for increasing or decreasing a sensory evaluation value corresponding to the sensory evaluation information during a cooking process performed by the cooking device.

This makes it easier to cook a dish that satisfies a user's taste-related preferences.

Additionally, for example, the one or more cooking parameters may include either one or more first cooking parameters corresponding to a dish with a first sensory evaluation value, or one or more modified cooking parameters corresponding to a dish with a second sensory evaluation value different from the first sensory evaluation value; and the one or more second cooking parameters may be such that a part or all of the one or more first cooking parameters have been modified.

This makes it easier to cook a dish that satisfies a user's taste-related preferences.

Furthermore, for example, the one or more cooking parameters may include second cooking parameters corresponding to a dish with the second sensory evaluation value; and the second cooking parameters each may have a different quantity of a chemical component contained in a dish with the second sensory evaluation value.

In addition, for example, the one or more cooking parameters may include a cooking parameter for altering a chemical component related to the sensory evaluation value.

This makes it easier to cook a dish that satisfies a user's taste-related preferences.

Additionally, for example, the dish information may indicate the dish in which ingredients are combined.

Furthermore, for example, the information processor may further acquire information indicating at least one of a type of an ingredient, a quantity of the ingredient, or a processed state of the ingredient.

This makes it easier to cook a dish that satisfies a user's taste-related preferences.

In addition, for example, the sensory evaluation value may include at least one of sweetness, saltiness, sourness, bitterness, or umami, represented quantitatively.

This makes it easier to cook a dish that satisfies a user's taste-related preferences.

Furthermore, for example, the one or more cooking parameters may include at least one of a temperature parameter indicating a temperature of the cooking device, or a time parameter indicating a cooking time of the cooking device.

This makes it easier to cook a dish that satisfies a user's taste-related preferences.

In addition, for example, the one or more cooking parameters may include a pressure parameter indicating a pressure of the cooking device.

This makes it easier to cook a dish that satisfies a user's taste-related preferences.

Additionally, for example, the information processor may acquire the cooking parameter information using a trained model, and the trained model may be machine-learned to take information indicating the dish and the sensory evaluation value as input, and to output the one or more cooking parameters.

This makes it easier to cook a dish that satisfies a user's taste-related preferences.

Furthermore, a control method according to one aspect of the present disclosure is a control method executed by a computer, including: acquiring dish information indicating a dish; acquiring sensory evaluation information based on the dish information; acquiring cooking parameter information, including one or more cooking parameters, based on the acquired dish information and sensory evaluation information; and outputting a control signal including the acquired cooking parameter information, wherein the cooking parameter information includes a cooking parameter for increasing or decreasing a sensory evaluation value corresponding to the sensory evaluation information.

This makes it easier to cook a dish that satisfies a user's taste-related preferences.

In addition, a control program according to one aspect of the present disclosure causes a computer to execute: acquiring dish information indicating a dish; acquiring sensory evaluation information based on the dish information; acquiring cooking parameter information, including one or more cooking parameters, based on the acquired dish information and sensory evaluation information; and outputting a control signal including the acquired cooking parameter information, wherein the cooking parameter information includes a cooking parameter for increasing or decreasing a sensory evaluation value corresponding to the sensory evaluation information.

This makes it easier to cook a dish that satisfies a user's taste-related preferences.

Additionally, an information provision system according to one aspect of the present disclosure includes: a display; and a display controller that causes the display to display a first image that receives input of dish information indicating a dish, to display a second image that receives input of sensory evaluation information based on the input dish information, and to display a third image that represents recipe information based on the input dish information and sensory evaluation information, wherein the recipe information includes at least one of pre-process information related to a pre-process preceding a cooking process in a cooking device, or post-process information related to a post-process following the cooking process in the cooking device.

This makes it easier to cook a dish that satisfies a user's taste-related preferences.

Furthermore, an information provision method according to one aspect of the present disclosure is an information provision method executed by a computer, including: acquiring dish information indicating a dish; acquiring sensory evaluation information based on the dish information; and outputting recipe information based on the acquired dish information and sensory evaluation information, wherein the recipe information includes at least one of pre-process information related to a pre-process preceding a cooking process in a cooking device, or post-process information related to a post-process following the cooking process in the cooking device.

This makes it easier to cook a dish that satisfies a user's taste-related preferences.

In addition, an information provision program according to one aspect of the present disclosure causes a computer to execute: acquiring dish information indicating a dish; acquiring sensory evaluation information based on the dish information; and outputting recipe information based on the acquired dish information and sensory evaluation information, wherein the recipe information includes at least one of pre-process information related to a pre-process preceding a cooking process in a cooking device, or post-process information related to a post-process following the cooking process in the cooking device.

This makes it easier to cook a dish that satisfies a user's taste-related preferences.

It can also be realized as a computer program that causes a computer to execute a characteristic process included in the control method of the present disclosure. Needless to say, such a computer program can be distributed via a computer-readable non-transitory recording medium such as a CD-ROM or through a communication network such as the Internet. The same applies to the information provision method of the present disclosure.

Hereinafter, an embodiment will be specifically described with reference to the drawings.

Note that the embodiment described hereinafter is all illustrative of comprehensive or specific examples of the present disclosure. The numerical values, shapes, materials, elements, the arrangement locations and connection forms of elements, steps, the order of steps, and the like discussed in the following embodiment are merely examples and are not intended to limit the present disclosure. Additionally, any elements in the following embodiment that are not described in the independent claims indicating the highest-level concept are described as optional elements. In addition, the contents of each of all embodiments can be combined. Furthermore, the drawings are schematic drawings and may not necessarily drawn to scale. In addition, the same reference numerals are used for the same component parts in each of the drawings.

Additionally, the control system according to the embodiment of the present disclosure may be configured such that all elements are included in a single computer, or it may be configured as a system in which elements are distributed across computers. The same applies to the information provision system according to the embodiment of the present disclosure.

### (Embodiment)

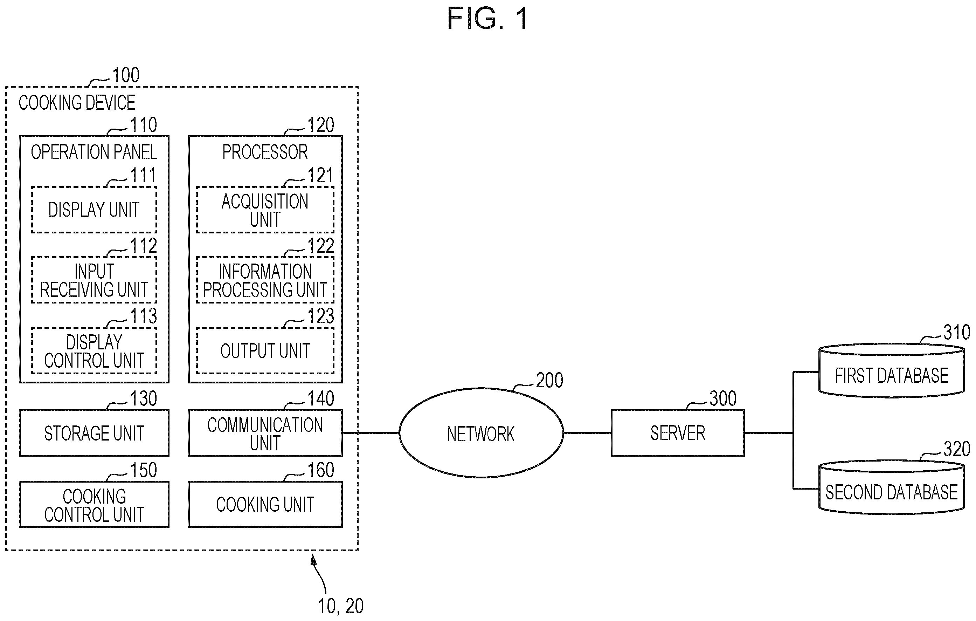

Hereinafter, a control system 10 (control method or control program) and an information provision system 20 (information provision method or information provision program), according to an embodiment of the present disclosure, will be described in detail using the drawings. Fig. 1 is a block diagram illustrating an overall configuration including the control system 10 and the information provision system 20 according to the embodiment.

The control system 10 and the information provision system 20 are both configured using a computer, such as a personal computer or a server. That is, both the control system 10 and the information provision system 20 may be realized, for example, by cloud computing. In the embodiment, the control system 10 and the information provision system 20 are described as being realized by a computer built in a cooking device 100. Additionally, in the embodiment, the cooking device 100 is described as being connected to a server 300 via a network 200, such as the Internet.

The cooking device 100 is, for example, a home appliance for cooking, such as a pressure cooker, or a commercial cooking device. In the embodiment, the cooking device 100 is a home appliance for cooking and is configured with a single enclosure. Note that, when the cooking device 100 is a commercial cooking device, the cooking device 100 may be configured with a single enclosure or may be configured with enclosures where functional components of the cooking device 100 are dispersed. In this case, the control system 10 and the information provision system 20 may be configured, for example, by a controller of the cooking device 100 or by an information terminal such as a smartphone.

The cooking device 100 falls under one of four types of devices: pressure cooker type, superheated steam type, IH (Induction Heating) cooking type, and container type.

The pressure cooker type device is a device that allows independent control of temperature and pressure within a sealed space, and is capable of cooking by boiling or stewing ingredients in a container. The pressure cooker type device can further perform cooking with water (described below) in its liquid state in a range that exceeds the upper limit of the temperature (e.g., 120 degrees Celsius) and the upper limit of the pressure (e.g., 0.2 MPa) utilized in commonly-used pressure cookers.

The superheated steam type device is a device that allows control of at least temperature, out of temperature and pressure, in a sealed or open space, and, by ejecting the generated superheated steam onto ingredients, it can perform cooking by steaming or grilling the ingredients. The superheated steam type device can further perform cooking that utilizes steam (described later) in its gas state in a range that exceeds the upper limit of the temperature (e.g., 120 degrees Celsius) and the upper limit of the pressure (e.g., 0.2 MPa) utilized in commonly-used pressure cookers. For the above-mentioned upper limits of temperature and pressure, see "http://www.apajapan.org/JPCC/pdf/poc01.pdf".

The IH cooking type device is a device that heats cookware, such as a frying pan, and is capable of cooking by grilling ingredients placed on the cookware. The container type device is a device configured to be capable of storing ingredients, with temperature control while the ingredients are stored, and is capable of fermenting or aging ingredients used when cooking items such as soy sauce or miso.

Here, cooking in a range that exceeds the upper limit (e.g., 120 degrees Celsius) of the temperature used in commonly-used pressure cookers has the advantage of facilitating hydrolysis because the ionic product is larger than cooking in the normal range (100 degrees Celsius). For example, in cooking within this range, the proteins contained in the ingredients are more easily hydrolyzed into peptides and amino acids. Additionally, for example, in cooking within this range, the collagen contained in the ingredients is more easily broken down into gelatin. For example, in cooking within this range using water in its liquid state, it becomes easier to extract bone marrow, including collagen, from bones such as beef bones, pork bones, or chicken carcasses.

The cooking device 100 includes an operation panel 110, a processor 120, a storage unit 130, a communication unit 140, a cooking control unit 150, and a cooking unit 160. Additionally, the operation panel 110 includes a display unit 111, an input receiving unit 112, and a display control unit 113. Furthermore, the processor 120 includes an acquisition unit 121, an information processing unit 122, and an output unit 123. In the embodiment, the control system 10 is configured with the acquisition unit 121, the information processing unit 122, and the output unit 123 of the processor 120. Also, in the embodiment, the information provision system 20 is configured with the display unit 111 and the display control unit 113 of the operation panel 110.

The display unit 111 is controlled by the display control unit 113 to display an image or the like. The display unit 111 is, but not limited to, for example, a liquid crystal display, a plasma display, or an organic EL (Electro-Luminescence) display.

The input receiving unit 112 is an input interface that receives input from a user, and is configured with, for example, a keyboard, a touch sensor, a touchpad, or a mouse. The input receiving unit 112 receives a user's input operation and outputs a signal in response to the input operation to the processor 120. Note that, in the present disclosure, the display unit 111 and the input receiving unit 112 are integrally configured with a touchscreen, but they may be configured independently of each other.

The display control unit 113 causes the display unit 111 to display an image or the like based on information output from the processor 120.

The acquisition unit 121 acquires information input by the user at the input receiving unit 112. The acquisition unit 121 also acquires information sent from the server 300 via the communication unit 140 and the network 200. In the embodiment, the acquisition unit 121 acquires dish information indicating a dish, and sensory evaluation information related to a user's taste-related preferences (hereinafter may also be referred to as a "taste need") based on the dish information. The dish information and sensory evaluation information will be described in detail in [Operation], which will be described later.

The information processing unit 122 acquires cooking parameter information, including one or more cooking parameters of a to-be-provided dish provided to the user, based on the dish information and sensory evaluation information acquired by the acquisition unit 121. The specific operation of the information processing unit 122 and the cooking parameter information will be described in detail in [Operation], which will be described later.

The output unit 123 outputs a control signal, including the cooking parameter information acquired by the information processing unit 122, to the cooking control unit 150, which controls the cooking device 100.

The storage unit 130 is a recording medium that stores programs executed by the processor 120 and various information used by the control system 10 and the information provision system 20. The recording medium is, for example, a hard disk drive, RAM (Random Access Memory), ROM (Read Only Memory), or semiconductor memory. Note that such a recording medium may be volatile or non-volatile.

The communication unit 140 is a communication interface that communicates with the server 300 via the network 200 through wired or wireless communication. The communication standard used in communication between the communication unit 140 and the server 300 is not particularly limited. Additionally, the communication unit 140 may communicate with the server 300 further via, for example, a relay device such as a router.

The cooking control unit 150 controls the cooking unit 160 in accordance with a control signal output from the output unit 123. For example, the cooking control unit 150 instructs the cooking unit 160 to start cooking or instructs the cooking unit 160 to stop cooking in accordance with the control signal. Additionally, for example, the cooking control unit 150 instructs the cooking unit 160 to change a part or all of the cooking performed by the cooking unit 160 in accordance with the control signal.

The cooking unit 160 performs various types of cooking in accordance with instructions from the cooking control unit 150. The cooking unit 160 is capable of performing cooking according to the type of the cooking device 100. For example, if the cooking device 100 is a pressure cooker type device, the cooking unit 160 can perform cooking by boiling or stewing ingredients.

The server 300 is configured to be capable of communicating with the cooking device 100 via the network 200. The server 300 has a first database 310 and a second database 320.

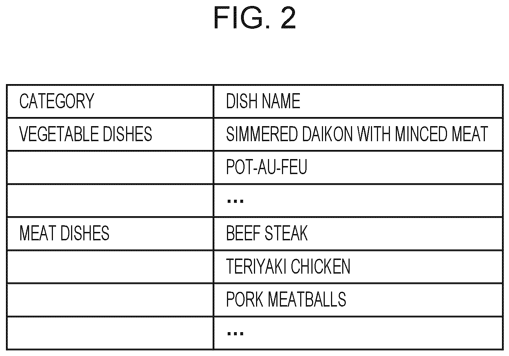

The first database 310 stores first information. The first information refers to information that indicates the correlation between a dish category and a dish. Fig. 2 is a diagram illustrating an example of the first information stored in the first database 310. As illustrated in Fig. 2, for example, when the dish category is "vegetable dishes", the dish names of dishes corresponding to this category include "simmered daikon with minced meat", "pot-au-feu", and the like. Similarly, if the dish category is "meat dishes", the dish names of dishes corresponding to this category include "beef steak", "teriyaki chicken", "pork meatballs", and the like. Note that the first information includes information on dishes in which sensory attributes can be increased or decreased during the cooking process in the cooking device 100. The first information is used when the user selects a dish category in step S200, which will be described later.

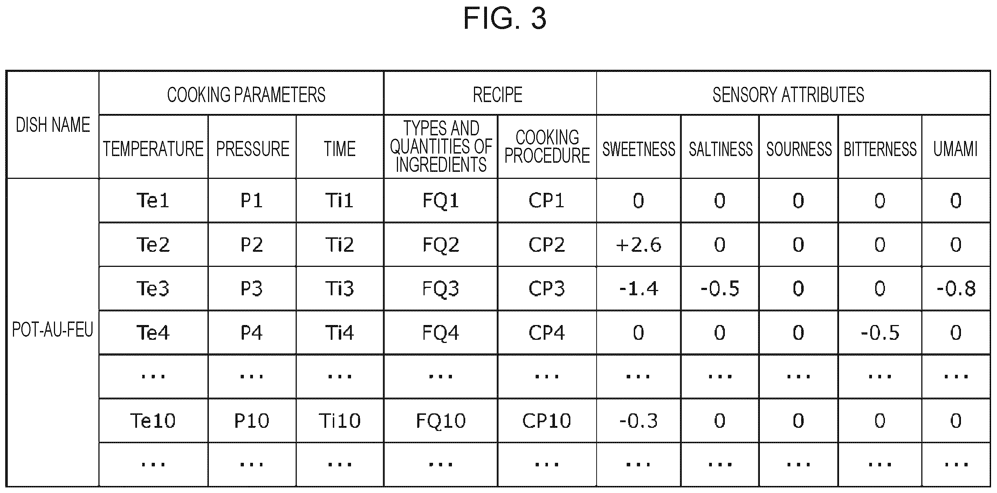

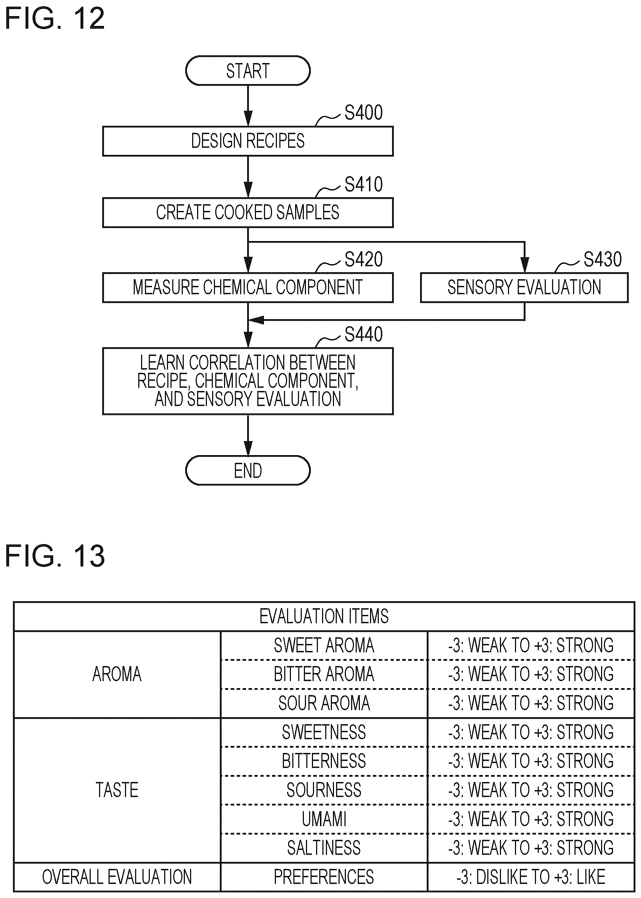

The second database 320 stores second information. The second information refers to information indicating the correlation between a dish (dish name), one or more cooking parameters, a recipe (types and quantities of ingredients, and cooking procedure), and sensory attributes (sensory evaluation values). Fig. 3 is a diagram illustrating an example of the second information stored in the second database 320. Here, sensory evaluation values are determined by the evaluator smelling the aroma of the dish, tasting the dish to check its taste, and so on. The evaluation items for the sensory evaluation values include, for example, aroma (sweet aroma, bitter aroma, and sour aroma), taste (sweetness, bitterness, sourness, umami, and saltiness), and overall evaluation. In the embodiment, as illustrated in Fig. 3, the second information includes a total of five evaluation items as sensory evaluation values: sweetness, saltiness, sourness, bitterness, and umami. The numerical values of the sensory evaluation values illustrated in Fig. 3 correspond to the sensory evaluation values illustrated in Fig. 13, which will be described later.

As illustrated in Fig. 3, for example, when the dish name is "pot-au-feu", one or more cooking parameters include "Te1" for the temperature of the cooking unit 160 (cooking device 100), "P1" for the pressure of the cooking unit 160, "Ti1" for the cooking time, "FQ1" for the types and quantities of ingredients, and "CP1" for the cooking procedure.

For example, "Te1" refers to 120°C to 160°C, "P1" refers to 2 to 15 atm, and "Ti1" refers to 0 to 30 minutes. That is, one or more cooking parameters are indicated by ranges of data, as mentioned above. Note that one or more cooking parameters may be represented by a single point of data, such as "Te1" at 150°C. Each parameter may be defined either as a range of data or as a single point of data, as mentioned above.

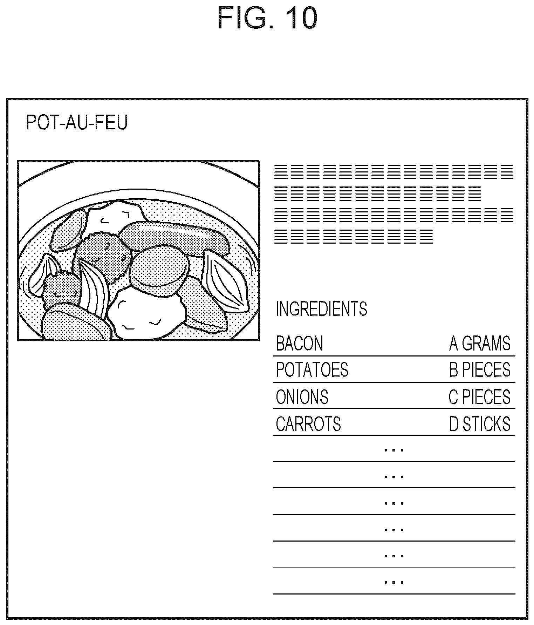

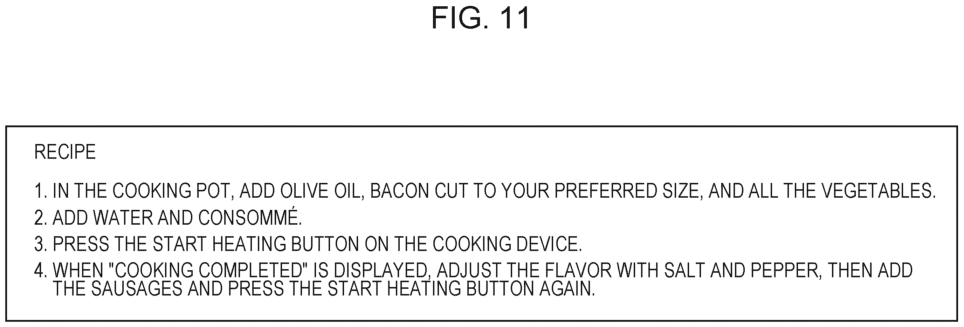

Here, the "FQ... " indicating the types and quantities of ingredients includes parameters such as those indicated in "Ingredients" in Fig. 10, which will be described later. Additionally, the "CP..." indicating the cooking procedure includes steps such as those illustrated in Fig. 11, as described below. The "CP..." indicating the cooking procedure includes the step of processing the ingredients. In other words, the "CP..." indicating the cooking procedure can be said to include the processed states of the ingredients. Here, the processed states of the ingredients include the cut state, size, or the like of the ingredients. For example, the processed states of the ingredients may include the ingredients being cubed, sliced, mashed, or the like. Additionally, for example, the processed states of the ingredients may include the ingredients being cut into 1 cm cubes, sliced to a thickness of 0.5 cm, or the like.

Additionally, one or more cooking parameters include at least one of a temperature parameter indicating the temperature of the cooking device 100 or a time parameter indicating the cooking time of the cooking device 100. The temperature and time parameters may be used regardless of whether the cooking device 100 is of the pressure cooker type, superheated steam type, IH cooking type, or container type. Furthermore, one or more cooking parameters further include a pressure parameter indicating the pressure of the cooking device 100. The pressure parameter may be used when the cooking device 100 is of the pressure cooker type or superheated steam type.

In the embodiment, the second information includes one or more reference cooking parameters for each to-be-provided dish provided to the user, and one or more modified cooking parameters in which a part or all of the one or more reference cooking parameters have been modified. Here, one or more reference cooking parameters are parameters that can be used to cook a dish with a standard sensory evaluation value.

For example, when the dish name is "pot-au-feu", one or more cooking parameters mentioned above (the temperature "Te1" of the cooking unit 160, the pressure "P1" of the cooking unit 160, and the cooking time "Ti1") correspond to one or more reference cooking parameters. In contrast, one or more modified cooking parameters (the temperature "Te2" to "Ten" (n is a natural number greater than or equal to 3) of the cooking unit 160, the pressure "P2" to "Pn" of the cooking unit 160, and the cooking time "Ti2" to "Tin") when the dish name is "pot-au-feu" are parameters that can be used to cook dishes with sensory evaluation values different from the standard sensory evaluation value. For example, when the dish name is "pot-au-feu" and one or more cooking parameters are the temperature "Te2" of the cooking unit 160, the pressure "P2" of the cooking unit 160, and the cooking time "Ti2", a dish with increased sweetness compared to the standard sensory evaluation value can be cooked.

Here, for example, it is known that during the cooking process in the cooking device 100 such as a pressure cooker or the like, the Maillard reaction is promoted, leading to the generation of Maillard peptides and aromatic components. Since Maillard peptides are chemical components that can influence sensory attributes such as umami and richness, adjusting the generation of Maillard peptides makes it possible to increase or decrease the umami components of a dish. As such, one or more cooking parameters refer to parameters for increasing or decreasing (including producing) a sensory evaluation value corresponding to the user's taste-related preferences during the cooking process performed by the cooking device 100.

In the embodiment, one or more cooking parameters for each to-be-provided dish in the second information are determined using a trained model generated by prior machine learning. The prior machine learning will be described in detail in [Prior Machine Learning], which will be described later.

Note that, to ensure a minimum balance of tastes, the second database 320 may store, as the second information, one or more combinations of cooking parameters whose overall sensory evaluation value (e.g., preference) exceeds a threshold. Furthermore, if there are numerous such combinations, the second database 320 may store representative combinations as the second information.

### [Operation]

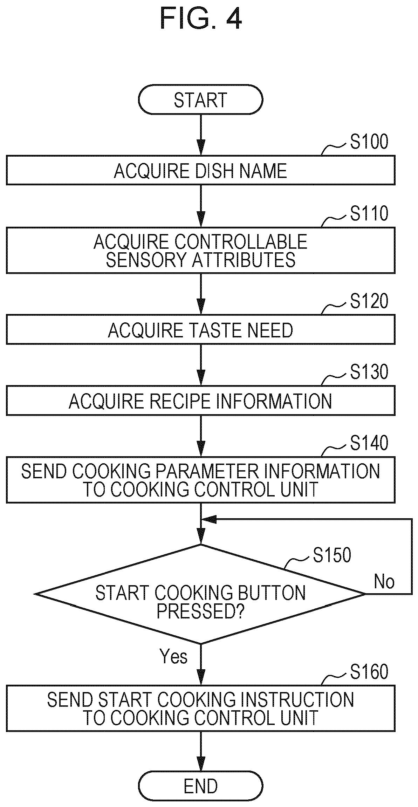

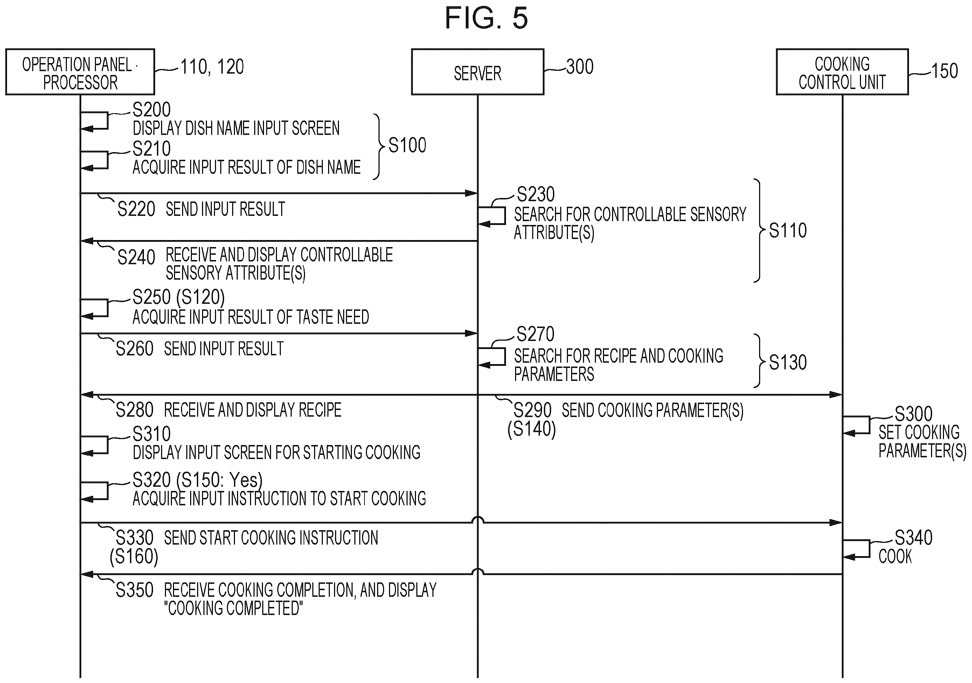

Hereinafter, the operation of the control system 10 (i.e., control method) and the operation of the information provision system 20 (i.e., information provision method) according to the embodiment will be described. Fig. 4 is a flowchart illustrating the overview of the operation of the control system 10 according to the embodiment. Fig. 5 is a sequence diagram illustrating the overview of the operation of each of the control system 10 and the information provision system 20 according to the embodiment.

### (Step S100)

As illustrated in Fig. 4, the acquisition unit 121 of the processor 120 acquires a dish name. The dish name is included in dish information indicating a dish. Step S100 corresponds to acquiring dish information in the control method. Additionally, step S100 also corresponds to acquiring dish information in the information provision method. Step S100 includes step S200 and step S210 illustrated in Fig. 5.

### <Step S200>

First, the display control unit 113 of the operation panel 110 causes the display unit 111 to display a dish name input screen. The dish name input screen corresponds to a first image that receives input of dish information. The display control unit 113 causes the display unit 111 to display one of the following first images.

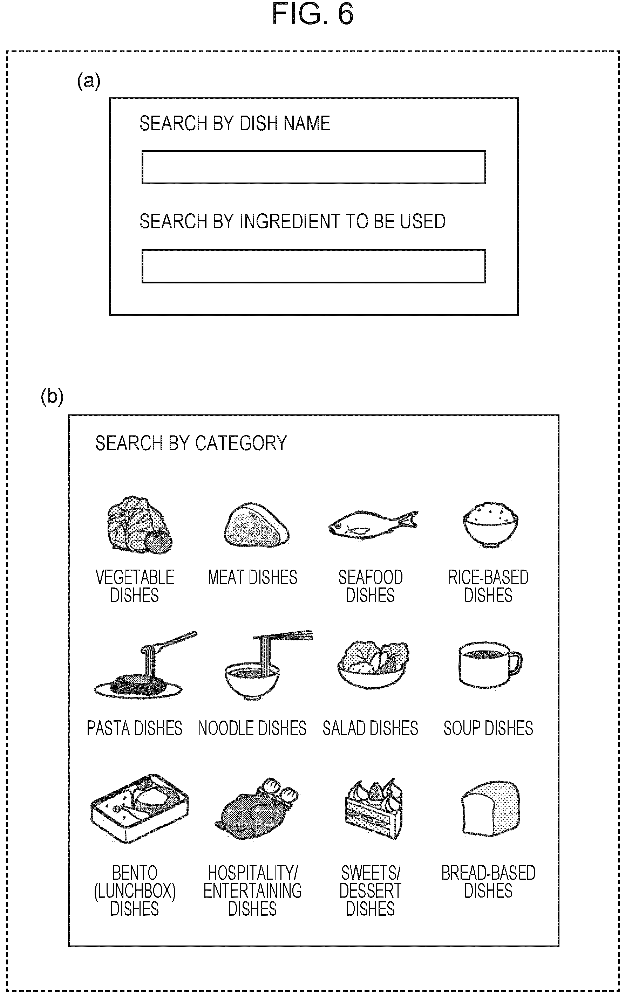

Fig. 6 includes diagrams each illustrating an example of the first image displayed on the display unit 111. Fig. 6(a) is a diagram illustrating a first example of the first image, and Fig. 6(b) is a diagram illustrating a second example of the first image. In the first image illustrated in Fig. 6(a), a first character string prompting the user to enter a dish name, and a first text box allowing the user to enter a character string corresponding to the first character string using a keyboard or similar device are displayed. Additionally, in the first image illustrated in Fig. 6(a), a second character string prompting the user to enter an ingredient name used in the dish, and a second text box corresponding to the second character string are displayed. The user may input a dish name, such as "curry" or "gratin", into the first text box, or may input an ingredient name, such as "chicken" or "pumpkin", used in the dish into the second text box.

In the first image illustrated in Fig. 6(b), a character string prompting the user to select one category from dish categories, and icons, each representing a dish category, are displayed. The user selects one category from the dish categories.

### <Step S210>

Referring back to Fig. 5, the user then directly or indirectly enters a dish name according to the input mode described in step S200, while looking at the first image displayed on the display unit 111 in step S200. As a result, the input receiving unit 112 of the operation panel 110 receives the user's input. Then, the acquisition unit 121 of the processor 120 acquires the input received by the input receiving unit 112, that is, the input result of the dish name.

For example, the user enters a dish name into the first text box while looking at the first image illustrated in Fig. 6(a). In this case, the acquisition unit 121 of the processor 120 directly acquires the dish name. Additionally, for example, the user enters an ingredient name into the second text box while looking at the first image illustrated in Fig. 6(a). In this case, the acquisition unit 121 of the processor 120 acquires a dish name using the input ingredient. Note that, when there are dishes using the input ingredient, the acquisition unit 121 of the processor 120 may randomly determine one dish from the dishes, and acquire the dish name of the dish. Furthermore, in this case, the acquisition unit 121 of the processor 120 may instruct the display control unit 113 to cause the display unit 111 to display an image with a character string prompting the user to determine one dish from the dishes, and options, each representing a corresponding dish name. Then, by the user selecting one option from the options, the acquisition unit 121 of the processor 120 is able to acquire the dish name.

In addition, for example, the user selects one category from dish categories while looking at the first image illustrated in Fig. 6(b). In this case, the acquisition unit 121 of the processor 120 sends the selected result to the server 300 via the communication unit 140 and the network 200. Upon receiving the selected result sent from the processor 120 via the communication unit 140 and the network 200, the server 300 accesses the first database 310 and matches the first information stored in the first database 310 with the received selected result. As a result, the server 300 selects a dish in the category selected by the user, and sends the selected result to the processor 120 via the communication unit 140 and the network 200. Upon receiving the selected result, the acquisition unit 121 of the processor 120 acquires the dish name included in the selected result.

Note that, if the category selected by the user includes dishes, the acquisition unit 121 of the processor 120 may randomly determine one dish from the dishes, and acquire the dish name of the dish. Additionally, in this case, the acquisition unit 121 of the processor 120 may instruct the display control unit 113 to cause the display unit 111 to display an image with a character string prompting the user to determine one dish from the dishes, and options, each representing a corresponding dish name. Then, by the user selecting one option from the options, the acquisition unit 121 of the processor 120 is able to acquire the dish name.

### (Step S110)

Referring back to Fig. 4, the acquisition unit 121 of the processor 120 presents controllable sensory attributes. Step S110 includes steps S220 to S240 illustrated in Fig. 5.

### <Step S220>

First, the acquisition unit 121 of the processor 120 sends the input result acquired in step S210 to the server 300 via the communication unit 140 and the network 200.

### <Step S230>

Upon receiving the input result sent from the processor 120 via the communication unit 140 and the network 200, the server 300 searches for the controllable sensory attributes. Specifically, the server 300 accesses the second database 320 and matches the second information stored in the second database 320 with the received input result, thereby selecting the controllable sensory attributes corresponding to the dish name included in the input result. For example, if the dish name included in the input result is "pot-au-feu", the server 300 selects "sweetness", "saltiness", "sourness", "bitterness", and "umami" as sensory attributes that can be controlled in this dish.

### <Step S240>

The server 300 sends the search result in step S230 to the processor 120 via the communication unit 140 and the network 200. Upon receiving the search result, the acquisition unit 121 of the processor 120 instructs the display control unit 113 to cause the display unit 111 to display one or more controllable sensory attributes included in the search result. In response to the instruction, the display control unit 113 of the operation panel 110 causes the display unit 111 to display an image with options of one or more controllable sensory attributes. The image corresponds to a second image that receives input of sensory evaluation information related to a user's taste-related preferences based on the input dish information.

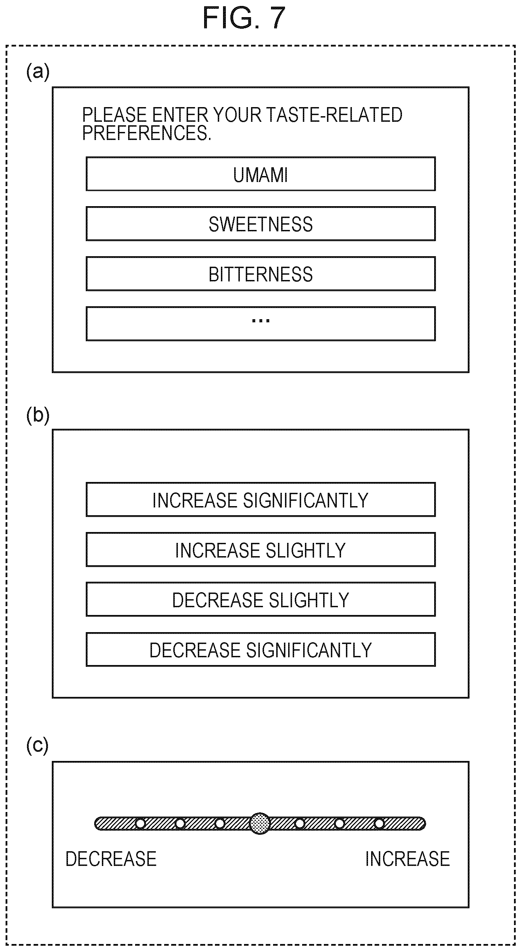

Fig. 7 includes diagrams each illustrating a first example of the second image displayed on the display unit 111. Fig. 7(a) illustrates the second image first displayed on the display unit 111. In the first image illustrated in Fig. 7(a), a character string prompting the user to enter taste-related preferences, and one or more options, each representing a controllable sensory attribute, are displayed. The user selects one sensory attribute from one or more controllable sensory attributes, such as "umami", "sweetness", "bitterness", etc.

Fig. 7(b) illustrates an example of the second image displayed on the display unit 111 when "umami" is selected as the sensory attribute. In the second image illustrated in Fig. 7(b), a character string prompting the user to select one option from options, and the options, each representing an increase or a decrease in the sensory attribute selected by the user, are displayed. The user selects one option from the options.

Fig. 7(c) illustrates another example of the second image displayed on the display unit 111 when "umami" is selected as the sensory attribute. In the second image illustrated in Fig. 7(c), a slider bar representing increases/decreases in the sensory attribute selected by the user is displayed. The user selects the desired degree of increase or decrease using the slider bar.

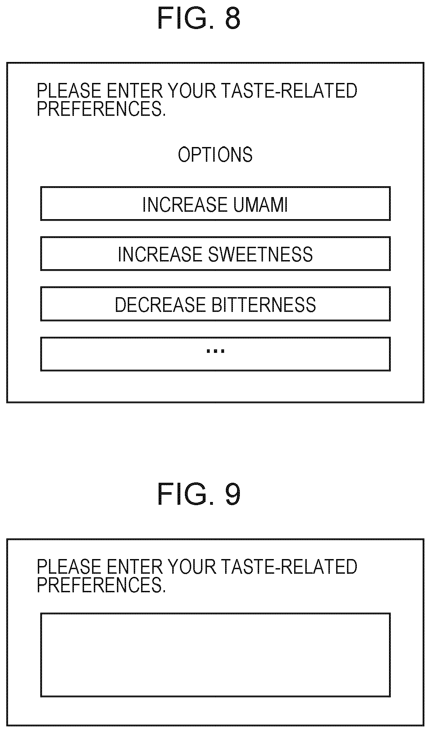

Fig. 8 is a diagram illustrating a second example of the second image displayed on the display unit 111. In the second image illustrated in Fig. 8, a character string prompting the user to enter taste-related preferences, and one or more options, each representing an increase or a decrease in a controllable sensory attribute, are displayed. The user selects one sensory increase or decrease, such as "increase umami", "increase sweetness", or "reduce bitterness", from among one or more sensory increases/decreases.

Fig. 9 is a diagram illustrating a third example of the second image displayed on the display unit 111. In the third image illustrated in Fig. 9, a character string prompting the user to enter taste-related preferences, and a text box allowing the user to enter a character string using a keyboard or similar device are displayed. The user enters a character string representing taste-related preferences, such as "enhance richness", into the text box.

Note that the user may enter a free-form sentence indicating taste-related preferences into the text box. Additionally, the second image may simply display a character string prompting the user to provide audio input of the user's taste-related preferences. In this case, the user provides the user's taste-related preferences through audio input. In the case where a character string is entered into the text box, the acquisition unit 121 of the processor 120 can identify the user's taste-related preferences using appropriate natural language processing techniques. Additionally, in the case where audio input is provided, the acquisition unit 121 of the processor 120 can identify the user's taste-related preferences using appropriate speech recognition techniques.

Note that, if the user's taste-related preferences fall outside the range of one or more controllable sensory attributes, the acquisition unit 121 of the processor 120 may instruct the display control unit 113 to cause the display unit 111 to display a character string, such as "That taste cannot be controlled".

### (Step S120)

Referring back to Fig. 4, the user then enters the user's taste need while looking at the second image displayed on the display unit 111 in step S240. As a result, the input receiving unit 112 of the operation panel 110 receives the user's input. Then, the acquisition unit 121 of the processor 120 acquires the input received by the input receiving unit 112, that is, the input result of the taste need. Step S120 corresponds to acquiring sensory evaluation information in the control method. Additionally, step S120 corresponds to acquiring sensory evaluation information in the information provision method. Step S120 corresponds to step S250 illustrated in Fig. 5.

### (Step S130)

Referring back to Fig. 4, the information processing unit 122 of the processor 120 acquires recipe information. Here, the recipe information refers to information related to a dish to be provided, and includes one or more cooking parameters of the to-be-provided dish, the types and quantities of ingredients used in the to-be-provided dish, and the cooking procedure of the to-be-provided dish. That is, the information processing unit 122 of the processor 120 acquires cooking parameter information, including one or more cooking parameters of a to-be-provided dish to be provided to the user, based on the acquired dish information (here, the dish name) and sensory evaluation information (here, the taste need). Additionally, the information processing unit 122 of the processor 120 further acquires information indicating at least one of the types, quantities, or processed states of ingredients contained in the to-be-provided dish. Step S130 corresponds to acquiring cooking parameter information in the control method. Step S130 includes steps S260 to S280 illustrated in Fig. 5.

### <Step S260>

First. the information processing unit 122 of the processor 120 sends the selected result acquired in step S250 to the server 300 via the communication unit 140 and the network 200.

### <Step S270>

Upon receiving the selected result sent from the processor 120 via the communication unit 140 and the network 200, the server 300 searches for a recipe and cooking parameters. Specifically, the server 300 accesses the second database 320 and matches the second information stored in the second database 320 with the received selected result, thereby selecting one or more cooking parameters and a recipe (the types and quantities of ingredients, and cooking procedure) corresponding to the dish name included in the selected result. For example, if the dish name included in the selected result is "pot-au-feu", the server 300 selects one or more cooking parameters and a recipe corresponding to the dish name.

### <Step S280>

The server 300 sends the search result in step S270, i.e., the recipe information, to the processor 120 via the communication unit 140 and the network 200. Upon receiving the recipe information, the information processing unit 122 of the processor 120 instructs the display control unit 113 to cause the display unit 111 to display a recipe included in the recipe information. In response to the instruction, the display control unit 113 of the operation panel 110 causes the display unit 111 to display an image with the recipe. The image corresponds to a third image that represents recipe information related to a to-be-provided dish provided to a user, based on the input dish information and sensory evaluation information. Step S280 corresponds to outputting recipe information in the information provision method.

Fig. 10 is a diagram illustrating a first example of the third image displayed on the display unit 111. Fig. 10 illustrates the third image displayed on the display unit 111 when the to-be-provided dish is "pot-au-feu". In the third image illustrated in Fig. 10, an image of "pot-au-feu", a character string indicating a description of "pot-au-feu", and the types and quantities of ingredients used in cooking "pot-au-feu" are displayed.

Fig. 11 is a diagram illustrating a second example of the third image displayed on the display unit 111. Fig. 11 illustrates the third image displayed on the display unit 111 when the to-be-provided dish is "pot-au-feu". In the third image illustrated in Fig. 11, character strings indicating the cooking procedure of "pot-au-feu" are displayed. The user cooks the to-be-provided dish while looking at the third image displayed on the display unit 111.

Here, the first and second steps in the cooking procedure of "pot-au-feu" correspond to a pre-process preceding the cooking process in the cooking device 100; the third step corresponds to a first cooking process; and the fourth step is a post-process following the first cooking process, and it also corresponds to a pre-process preceding a second cooking process, where the user is instructed to "press the 'start heating' button again". As such, the recipe information includes at least one of pre-process information related to a pre-process preceding a cooking process in the cooking device 100, or post-process information related to a post-process following the cooking process in the cooking device 100.

### (Step S140)

Referring back to Fig. 4, either following step S130 or in parallel with S130, the output unit 123 of the processor 120 outputs (sends) a control signal, including one or more cooking parameters included in the recipe information, that is, the acquired cooking parameter information, to the cooking control unit 150, which controls the cooking device 100. Step S140 corresponds to outputting a control signal in the control method. Step S140 corresponds to step S290 illustrated in Fig. 5.

### <Step S300>

Referring back to Fig. 5, upon receiving one or more cooking parameters sent from the processor 120, the cooking control unit 150 sets the one or more cooking parameters.

### <Step S310>

Next, the display control unit 113 of the processor 120 causes the display unit 111 to display an input screen for starting cooking. On the input screen for starting cooking, for example, a start cooking button, which is for starting cooking by the cooking unit 160, is displayed. The user performs input of pressing the start cooking button after completing, for example, a pre-process preceding the cooking process.

### (Step S150)

Referring back to Fig. 4, the output unit 123 of the processor 120 waits until the user presses the start cooking button (step S150: No). Then, when the user presses the start cooking button, i.e., when the output unit 123 of the processor 120 acquires an input instruction to start cooking (step S150: Yes), the output unit 123 executes step S160. Yes in step S150 corresponds to step S320 illustrated in Fig. 5.

### (Step S160)

The output unit 123 of the processor 120 then outputs (sends) a control signal including a start cooking instruction indicating to start cooking by the cooking unit 160 to the cooking control unit 150. Step S160 corresponds to step S330 illustrated in Fig. 5.

### <Step S340>

As illustrated in Fig. 5, the cooking control unit 150 instructs the cooking unit 160 to start cooking. As a result, the cooking unit 160 performs cooking in accordance with the one or more cooking parameters set by the cooking control unit 150.

### <Step S350>

The cooking control unit 150 instructs the cooking unit 160 to stop cooking when the set cooking time has elapsed. As a result, the cooking unit 160 stops cooking. The cooking control unit 150 then sends a cooking completion signal to the processor 120, indicating that the cooking has been completed. Upon receiving the cooking completion signal, the processor 120 instructs the display control unit 113 to cause the display unit 111 to display the character string "cooking completed" indicating that the cooking has been completed. In response to the instruction, the display control unit 113 of the operation panel 110 causes the display unit 111 to display an image with the character string "cooking completed".

### [Prior Machine Learning]

Hereinafter, a method of determining one or more cooking parameters for each to-be-provided dish in the second information stored in the second database 320 using a trained model generated by prior machine learning will be described in detail. Fig. 12 is a flowchart illustrating a process of generating a trained model.

### (Step S400)

First, for each dish to be provided, recipes are designed by varying the recipe parameters (such as one or more cooking parameters, the quantities of the ingredients, and the processed states of the ingredients).

Here, a health component (chemical component) effective for health is produced by combining or decomposing the existing component(s) originally contained in the ingredients through chemical reactions. For this reason, the content of a health component contained in a dish depends not only on one or more cooking parameters but also on the quantities and processed states of the ingredients. Therefore, the quantities and processed states of the ingredients are included as the recipe parameters.

By the way, if there are numerous recipe parameters, designing recipes for all possible combinations of these parameters would require an enormous amount of effort in creating cooked samples for the individual recipes, as well as in measuring the chemical components of the cooked samples and performing sensory evaluations, as will be described later. Therefore, in the embodiment, the experimental design method (orthogonal array) is used to reduce the number of recipes to be designed. In the experimental design method (orthogonal array), qualitative variables such as the cut states of the ingredients in their processed states are replaced with binary dummy variables.

### (Step S410)

Next, cooked samples are created according to the recipes designed in step S400.

### (Step S420)

Next, for each of the cooked samples created in step S410, the type of the chemical component contained in the cooked sample and the content thereof are measured. For example, if the chemical component is a volatile component, gas chromatography or the like can be used to measure the chemical component. Additionally, for example, if the chemical component is a liquid component, liquid chromatography or the like can be used to measure the chemical component. Furthermore, various analytical methods for nutrient components can be used for measuring chemical components. For example, for proteins, the nitrogen quantification conversion method can be used; and for lipids, the ether extraction method can be used.

### (Step S430)

Next, either following step S420 or in parallel with S420, sensory evaluation (analytical sensory evaluation in the embodiment) is performed for each of the cooked samples created in step S410 by the evaluator smelling the aroma of the cooked sample, tasting the sample to check its taste, and so on. There may be one or more evaluators. If there are evaluators, the average of their evaluation values may be adopted as the sensory evaluation.

Fig. 13 is a diagram illustrating an example of evaluation items for sensory evaluation. As illustrated in Fig. 13, evaluation items for the sensory evaluation values include, for example, aroma (sweet aroma, bitter aroma, and sour aroma), taste (sweetness, bitterness, sourness, umami, and saltiness), and overall evaluation. Here, each evaluation item is rated on a seven-point scale, ranging from "-3" to "+3". For example, if the evaluation item is "sweet aroma", a lower evaluation value indicates a weaker sweet aroma of the cooked sample, while a higher evaluation value indicates a stronger sweet aroma of the cooked sample. For each cooked sample, the evaluator conducts sensory evaluation according to each evaluation item illustrated in Fig. 13.

### (Step S440)

Next, a trained model is generated by learning the correlation between a recipe, its chemical component, and its sensory evaluation. Specifically, the correlation between a recipe and its chemical component, the correlation between the chemical component and its sensory evaluation, and the correlation between the recipe and its sensory evaluation are each modeled using machine learning.

As an example, the concept of modeling the correlation between a recipe and its sensory evaluation will be described. In modeling, first, the evaluation data of sensory evaluation will be described. In the evaluation data of sensory evaluation, the sensory evaluation is the dependent variable, and all the parameters included in the recipe are the independent variables. For the simplicity of the description, it will be described here that the independent variables are the two cooking parameters: the temperature and the pressure of the cooking device 100.

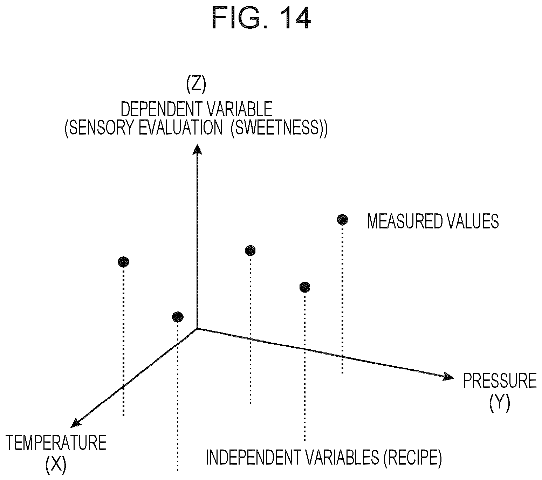

Fig. 14 is a diagram illustrating an example of the evaluation data of sensory evaluation. In Fig. 14,the X-axis and Y-axis represent the temperature and pressure of the cooking device 100, respectively, which are the independent variables, while the Z-axis represents the sensory evaluation (sweetness in this case), which is the dependent variable. Then, the values of the dependent variable (Z-axis) at the coordinates indicated as black circles in Fig. 14 represent the evaluation data (evaluation values) of sensory evaluation, respectively. As illustrated in Fig. 14, changes in the temperature and pressure of the cooking device 100, which are the independent variables, cause the sensory evaluation value, which is the dependent variable, to change.

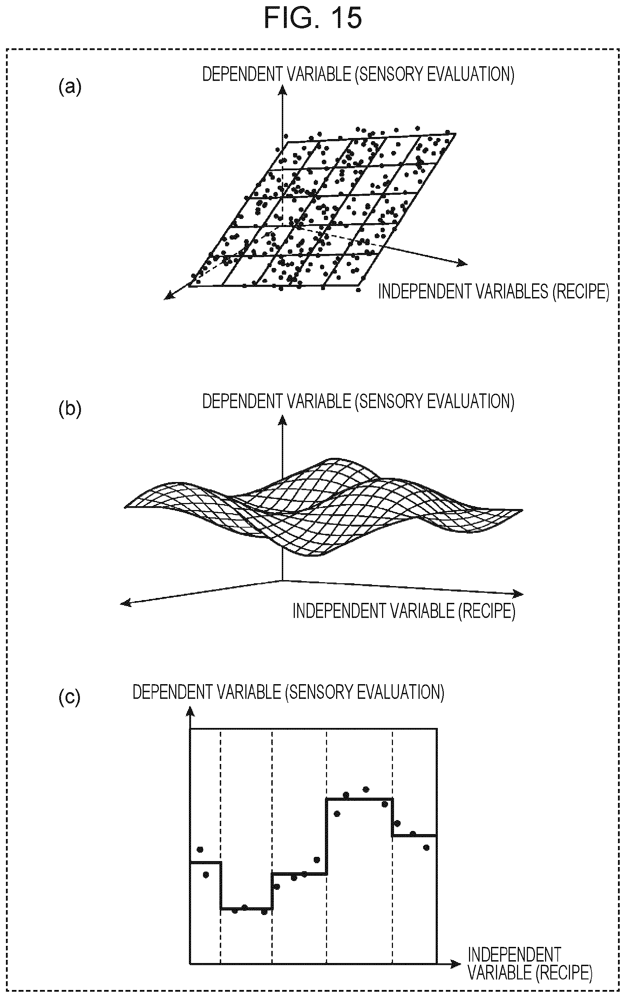

Then, the correlation between the recipe and the sensory evaluation is modeled by performing machine learning on items of evaluation data. Fig. 15 includes diagrams each illustrating an example of a trained model. For example, if the individual items of evaluation data can be linearly approximated, machine learning methods such as elastic net regression or support vector regression (linear kernel) can be used to enable linear modeling, as illustrated in Fig. 15(a). In Fig. 15(a), the two axes forming the bottom surface represent the independent variables (recipe), while the axis perpendicular to the bottom surface represents the dependent variable (sensory evaluation). For example, if the individual items of evaluation data cannot be linearly approximated, machine learning methods such as support vector regression (nonlinear kernel) can be used to enable nonlinear modeling, as illustrated in Fig. 15(b). In Fig. 15(b), the two axes forming the bottom surface represent the independent variables (recipe), while the axis perpendicular to the bottom surface represents the dependent variable (sensory evaluation). In addition, machine learning methods such as random forest regression can be used to enable partitioned linear modeling, as illustrated in Fig. 15(c). In Fig. 15(c), the horizontal axis represents the independent variable (recipe), while the vertical axis represents the dependent variable (sensory evaluation).

Subsequently, the above-described machine learning is repeated for each sensory evaluation, with the dependent variable, i.e., the sensory evaluation item, being changed. As a result, it becomes possible to generate a trained model that is machine-learned to take one or more cooking parameters as input, and to output the sensory evaluation value of the to-be-provided dish. In other words, it is possible to generate a trained model that is machine-learned to take information indicating a to-be-provided dish and its sensory evaluation value as input, and to output one or more cooking parameters.

Using the trained model generated in this way, it is possible to calculate the second information stored in the second database 320.

### [Advantages]

As described above, the control system 10 (control method or control program) according to the embodiment can cause a sensory evaluation value corresponding to a user's taste-related preferences to increase or decrease during the cooking process performed by the cooking device 100. Additionally, in the information provision system 20 (information provision method or information provision program) according to the embodiment, it is possible to provide the user with recipe information related to a to-be-provided dish that causes a sensory evaluation value corresponding to the user's taste-related preferences to increase or decrease during the cooking process performed by the cooking device 100. Therefore, in the embodiment, there is an advantage that it is easy to cook a dish that satisfies a user's taste-related preferences.

### (Modifications)

Although the above describes the control system (control method) and the information provision system (information provision method) according to one or more aspects of the present disclosure based on the embodiment, the present disclosure is not limited to the embodiment. As long as it does not depart from the spirit of the present disclosure, various modifications conceived by those skilled in the art, applied to the above embodiment, may also be included in the present disclosure.

In the embodiment, the control system 10 may determine one or more cooking parameters that can be used to cook a to-be-provided dish that has a sensory evaluation value indicating the user's desired sensory attribute, while sensory evaluation values indicating other sensory attributes are adjusted. In other words, the information provision system 20 may output recipe information for a to-be-provided dish that has a sensory evaluation value indicating the user's desired sensory attribute, while sensory evaluation values indicating other sensory attributes are adjusted.

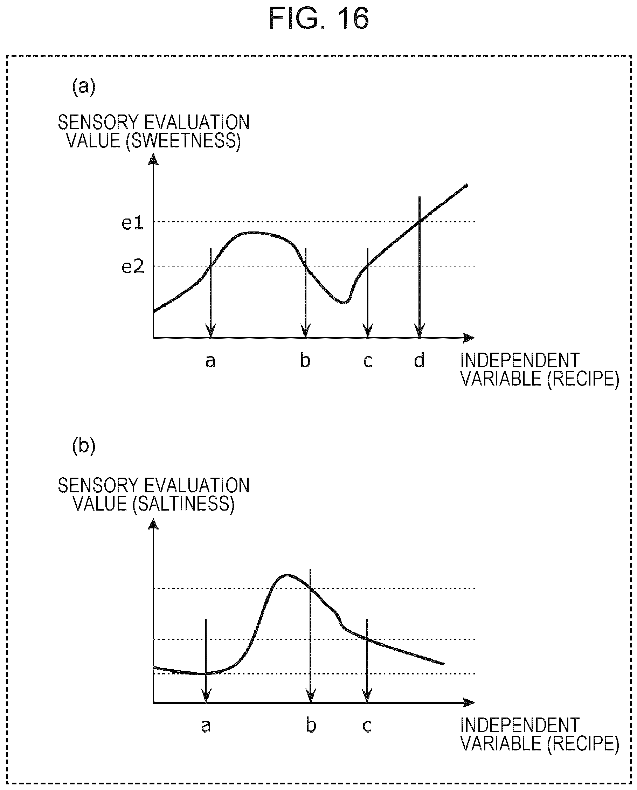

Hereinafter, a method of determining one or more cooking parameters that take into account other sensory attributes will be described. Fig. 16 includes diagrams each illustrating an example of determining one or more cooking parameters. Fig. 16(a) is a diagram illustrating the correlation between a recipe and its sensory evaluation (sweetness), and Fig. 16(b) is a diagram illustrating the correlation between a recipe and its sensory evaluation (saltiness). As illustrated in Fig. 16(a), when the sensory evaluation value indicating the user's desired sweetness is "e1", a recipe corresponding to this sensory evaluation value is "d". In contrast, when the sensory evaluation value indicating the user's desired sweetness is "e2 (<e1)", recipes corresponding to this sensory evaluation value are three recipes "a, "b, and "c". In this case, as illustrated in Fig. 16(b), the sensory evaluation values indicating saltiness differ in the recipes "a," "b," and "c." Therefore, it is possible to determine one or more cooking parameters that can be used to cook a dish with a sensory evaluation value indicating the user's desired sweetness, while sensory evaluation values of other sensory attributes (in this case, saltiness) are adjusted.

In the embodiment, the control system 10 may determine one or more cooking parameters that can be used to cook a dish with a sensory evaluation value indicating the user's desired sensory attributes, while a chemical component, such as a health component, is adjusted. In other words, the information provision system 20 may output recipe information for a to-be-provided dish with a sensory evaluation value indicating the user's desired characteristic, while the above-mentioned chemical component is adjusted. In other words, one or more cooking parameters for the to-be-provided dish may include a cooking parameter for altering a chemical component related to a sensory evaluation value corresponding to a user's taste-related preferences. Hereinafter, the configuration to achieve the above will be described.

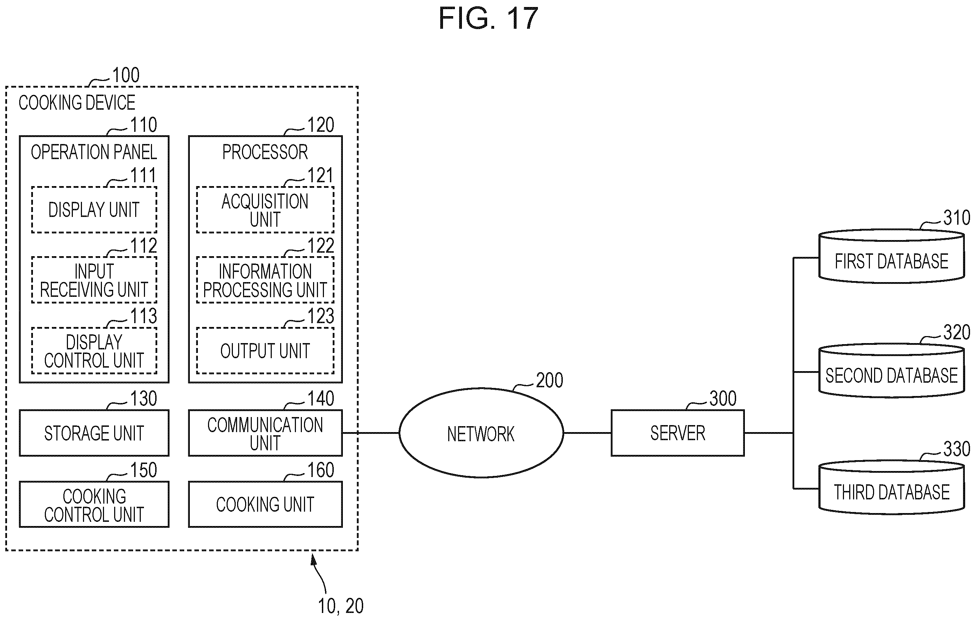

Fig. 17 is a block diagram illustrating an overall configuration including the control system 10 and the information provision system 20 according to a modification of the embodiment. In the modification, the server 300 further has a third database 330.

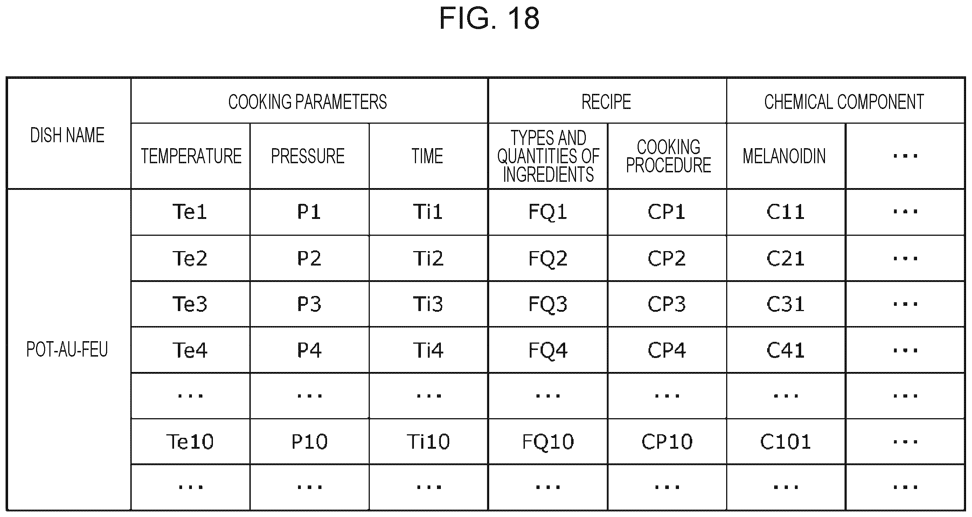

The third database 330 stores third information. The third information refers to information indicating the correlation between a dish (dish name), one or more cooking parameters, a recipe (types and quantities of ingredients, and cooking procedure), and a chemical component. Fig. 18 is a diagram illustrating an example of the third information stored in the third database 330. Here, "C11," "C21," ... "C101," ... represent the content (including zero) of melanoidin contained in the to-be-provided dish when the dish is cooked using the corresponding recipe and one or more cooking parameters.

Here, melanoidin is a chemical component with antioxidant properties that is effective for the user's health, such as in preventing arteriosclerosis. Melanoidin is produced through the promotion of the Maillard reaction during the cooking process in the cooking device 100, such as a pressure cooker, for example. In this way, the chemical component is generated during the cooking process performed by the cooking device 100; in other words, the chemical component can be increased or decreased during the cooking process performed by the cooking device 100.

The third information stored in the third database 330 is, for example, referred to, along the second information, by the server 300 in step S270, and is used when searching for a recipe and cooking parameters. Note that the third information stored in the third database 330 may be integrated with the second information stored in the second database 320.

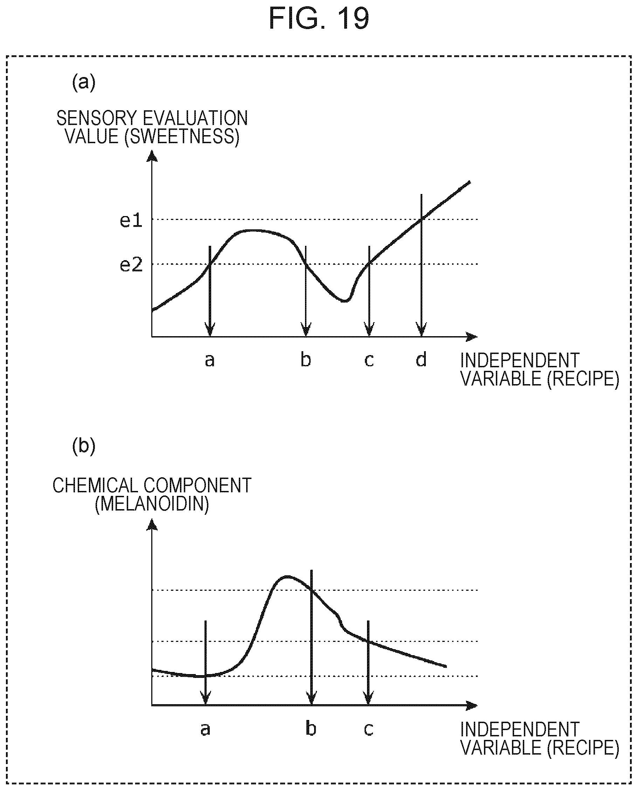

Hereinafter, a method of determining one or more cooking parameters that take into account the chemical component mentioned above will be described. Fig. 19 includes diagrams each illustrating an example of a method of determining one or more cooking parameters. Fig. 19(a) is a diagram illustrating the correlation between a recipe and its sensory evaluation (sweetness), and Fig. 19(b) is a diagram illustrating the correlation between a recipe and its chemical components (in this case, melanoidin). As illustrated in Fig. 19(a), when the sensory evaluation value indicating the user's desired sweetness is "e1," the recipe corresponding to this sensory evaluation value is "d." In the meantime, when the sensory evaluation value indicating the user's desired sweetness is "e2 (<e1)", the recipes corresponding to this sensory evaluation value are three recipes "a," "b," and "c." In this case, as illustrated in Fig. 19(b), the melanoidin content differs among the recipes "a," "b," and "c." Therefore, it is possible to determine one or more cooking parameters that can be used to cook a to-be-provided dish with the sensory evaluation value indicating the user's desired sweetness, while the melanoidin content is adjusted.

In the embodiment, the server 300 includes the first database 310 and the second database 320, but this is not the only possible configuration. For example, the storage unit 130 may include the first database 310 and the second database 320. Similarly, in the modification where the server 300 includes the third database 330, the storage unit 130 may also include the third database 330. In this case, the server 300 is unnecessary.

In the embodiment, the information processing unit 122 of the processor 120 accesses the second database 320 to acquire cooking parameter information, but this is not the only possible case. For example, the information processing unit 122 of the processor 120 may acquire cooking parameter information using a trained model generated by prior machine learning. Specifically, the information processing unit 122 of the processor 120 can acquire one or more cooking parameters of the to-be-provided dish by inputting the desired sensory evaluation value into the trained model corresponding to the to-be-provided dish. In this case, the second database 320 is unnecessary. Similarly, in the modification where the server 300 includes the third database 330, the third database 330 is unnecessary in this case.

In the embodiment, for example, when the control system 10 and the information provision system 20 correspond to a terminal (a controller or an information terminal such as a smartphone) that manages cooking devices, one or more cooking parameters may further include the types of the cooking devices.

Note that, in the above-described embodiment, each element may be realized either by dedicated hardware or by executing a software program suitable for each element. Each element may be realized by a program execution unit such as a CPU (Central Processing Unit) or processor, which reads and executes a software program stored on a recording medium such as a hard disk or semiconductor memory.

Note that the following cases are also included in the present disclosure.
(1) At least one of the above-mentioned devices is specifically a computer system composed of a microprocessor, ROM (Read Only Memory), RAM (Random Access Memory), a hard disk unit, a display unit, a keyboard, a mouse, and the like. The RAM or hard disk unit stores a computer program. By the microprocessor operating according to the computer program, at least one of the above-mentioned devices achieves its function. Here, the computer program is composed of a combination of instruction codes that indicate commands to the computer in order to achieve a predetermined function.
(2) A part or all of the elements constituting at least one of the above-mentioned devices may be composed of a single system LSI (Large Scale Integration circuit). The system LSI is ultra-multifunctional LSI in which elements are integrated onto a single chip, and specifically, it is a computer system that includes a microprocessor, ROM, RAM, and the like. The RAM stores a computer program. By the microprocessor operating according to the computer program, the system LSI achieves its function.
(3) A part or all of the elements constituting at least one of the above-mentioned devices may be composed of a detachable IC card or a standalone module for that device. The IC card or module is a computer system composed of a microprocessor, ROM, RAM, and the like. The IC card or module may include the above-mentioned ultra-multifunctional LSI. By the microprocessor operating according to the computer program, the IC card or module achieves its function. The IC card or module may have tamper resistance.
(4) The present disclosure may also be the methods described above. Additionally, the present disclosure may be a computer program that implements these methods on a computer, or it may be a digital signal composed of the computer program.

Additionally, the present disclosure may be a computer program or digital signal recorded on a computer-readable recording medium, such as a flexible disk, hard disk, CD (Compact Disc)-ROM, DVD, DVD-ROM, DVD-RAM, BD (Blu-ray (registered trademark) Disc), semiconductor memory, or the like. Additionally, it may be a digital signal recorded on these recording mediums.

Furthermore, the present disclosure may involve transmitting a computer program or digital signal via telecommunication lines, wireless or wired communication lines, networks such as the Internet, data broadcasting, or the like.

In addition, the program or digital signal may be transferred by recording it onto a recording medium and transporting it, or by transferring the program or digital signal via a network or the like, and it may be implemented by another independent computer system.

### (Conclusion)

As described above, the control system 10 according to a first aspect includes the acquisition unit 121, the information processing unit 122, and the output unit 123. The acquisition unit 121 acquires dish information indicating a dish, and sensory evaluation information based on the dish information. The information processing unit 122 acquires cooking parameter information, including one or more cooking parameters, based on the acquired dish information and sensory evaluation information. The output unit 123 outputs a control signal, including the acquired cooking parameter information, to the cooking control unit 150, which controls the cooking device 100. The cooking parameter information includes a cooking parameter for increasing or decreasing a sensory evaluation value corresponding to the sensory evaluation information during a cooking process performed by the cooking device 100.

Additionally, in the control system 10 according to a second aspect, in the first aspect, the one or more cooking parameters include either one or more first reference cooking parameters corresponding to a dish with a first sensory evaluation value, or one or more second cooking parameters corresponding to a dish with a second sensory evaluation value different from the first sensory evaluation value, and the one or more second cooking parameters are such that a part or all of the one or more first cooking parameters have been modified.

Furthermore, in the control system 10 according to a third aspect, in the second aspect, the one or more cooking parameters include second cooking parameters corresponding to a dish with the second sensory evaluation value, and the second cooking parameters each have a different quantity of a chemical component contained in a dish with the second sensory evaluation value.

In addition, in the control system 10 according to a fourth aspect, in the first or second aspect, the one or more cooking parameters include a cooking parameter for altering a chemical component related to the sensory evaluation value.

Additionally, in the control system 10 according to a fifth aspect, in the first or second aspect, the dish information indicates the dish in which ingredients are combined.

Furthermore, in the control system 10 according to a sixth aspect, in the first or second aspect, the information processing unit 122 further acquires information indicating at least one of a type of an ingredient, a quantity of the ingredient, or a processed state of the ingredient.

In addition, in the control system 10 according to a seventh aspect, in the first or second aspect, the sensory evaluation value includes at least one of sweetness, saltiness, sourness, bitterness, or umami, represented quantitatively.

Additionally, in the control system 10 according to an eighth aspect, in the first or second aspect, the one or more cooking parameters include at least one of a temperature parameter indicating a temperature of the cooking device 100, or a time parameter indicating a cooking time of the cooking device 100.

Furthermore, in the control system 10 according to a ninth aspect, in the first or second aspect, the one or more cooking parameters include a pressure parameter indicating a pressure of the cooking device 100.

In addition, in the control system 10 according to a tenth aspect, in the first or second aspect, the information processing unit 122 acquires the cooking parameter information using a trained model. The trained model is machine-learned to take information indicating the dish and the sensory evaluation value as input, and to output the one or more cooking parameters.

Additionally, a control method according to an eleventh aspect is a control method executed by a computer, including: acquiring dish information indicating a dish (step S100); acquiring sensory evaluation information based on the dish information (step S120); acquiring cooking parameter information, including one or more cooking parameters, based on the acquired dish information and sensory evaluation information (step S130); and outputting a control signal including the acquired cooking parameter information (step S140). The cooking parameter information includes a cooking parameter for increasing or decreasing a sensory evaluation value corresponding to the sensory evaluation information.

Furthermore, a control program according to a twelfth aspect causes a computer to execute: acquiring dish information indicating a dish (step S100); acquiring sensory evaluation information based on the dish information (step S120); acquiring cooking parameter information, including one or more cooking parameters, based on the acquired dish information and sensory evaluation information (step S130); and outputting a control signal including the acquired cooking parameter information (step S140). The cooking parameter information includes a cooking parameter for increasing or decreasing a sensory evaluation value corresponding to the sensory evaluation information.

In addition, the information provision system 20 according to a thirteenth aspect includes the display unit 111 and the display control unit 113. The display control unit 113 causes the display unit 111 to display a first image that receives input of dish information indicating a dish, to display a second image that receives input of sensory evaluation information based on the input dish information, and to display a third image that represents recipe information based on the input dish information and sensory evaluation information. The recipe information includes at least one of pre-process information related to a pre-process preceding a cooking process in the cooking device 100, or post-process information related to a post-process following the cooking process in the cooking device 100.

Additionally, an information provision method according to a fourteenth aspect is an information provision method executed by a computer, including: acquiring dish information indicating a dish (step S100); acquiring sensory evaluation information based on the dish information (step S120); and outputting recipe information based on the acquired dish information and sensory evaluation information (step S280). The recipe information includes at least one of pre-process information related to a pre-process preceding a cooking process in the cooking device 100, or post-process information related to a post-process following the cooking process in the cooking device 100.

Furthermore, an information provision program according to a fifteenth aspect causes a computer to execute: acquiring dish information indicating a dish (step S100); acquiring sensory evaluation information based on the dish information (step S120); and outputting recipe information based on the acquired dish information and sensory evaluation information (step S280). The recipe information includes at least one of pre-process information related to a pre-process preceding a cooking process in the cooking device 100, or post-process information related to a post-process following the cooking process in the cooking device 100.

### (Miscellaneous)

Modifications of the embodiment of the present disclosure may be as described below.

### (Item 1)

A method executed by a computer, the method including:
causing a display to display n tastes included in five basic tastes of sweetness, saltiness, sourness, bitterness, and umami, where the n tastes are determined based on a first dish name provided by a user and a first table, with the first dish name corresponding to a first dish, where 1 ≤ n <5, and n is an integer;
receiving a first instruction from the user, where the first instruction indicates increasing a first taste of the first dish beyond a standard intensity of the first taste of the first dish, and the first taste is included in the n tastes;
causing the display to display first information including a name and a first quantity of a first ingredient, ..., and a name and a p-th quantity of a p-th ingredient, where the first information is determined based on the first instruction and a second table, and the p is an integer greater than or equal to 1; and
controlling a device storing the first quantity of the first ingredient, ..., and the p-th quantity of the p-th ingredient, based on second information corresponding to the first instruction, to produce the first dish with the increased first taste, where the second information is determined based on the first instruction and a third table.

### (Description of Item 1)

"causing a display to display n tastes included in five basic tastes of sweetness, saltiness, sourness, bitterness, and umami, where the n tastes are determined based on a first dish name provided by a user and a first table, with the first dish name corresponding to a first dish" is disclosed in, for example, Fig. 7 and its related description.

"a first table" is disclosed in, for example, the "Sensory attributes" column of Fig. 3 and its related description.

"receiving a first instruction from the user, where the first instruction indicates increasing a first taste of the first dish beyond a standard intensity of the first taste of the first dish, and the first taste is included in the n tastes" is disclosed in, for example, Fig. 7 and its related description.

"causing the display unit to display first information including a name and a first quantity of a first ingredient, ..., and a name and a p-th quantity of a p-th ingredient, where the first information is determined based on the first instruction and a second table" is disclosed in, for example, Fig. 10 and the related description of Fig. 19.

"a second table" is disclosed in, for example, the "Recipe" column of Fig. 3 and its related description.

"controlling a device storing the first quantity of the first ingredient, ..., and the p-th quantity of the p-th ingredient, based on second information corresponding to the first instruction, to produce the first dish with the increased first taste, where the second information is determined based on the first instruction and a third table" is disclosed in S290, S300, S340, S350, and their related descriptions.

"a third table" is disclosed in, for example, the "Cooking Parameters" column of Fig. 3 and its related description.

### (Item 2)

The method according to the item 1, wherein:
the second information includes third information, fourth information, or both the third information and the fourth information;
the third information includes a temperature value for controlling the device and a time for controlling the device at the temperature value; and
the fourth information includes a pressure value for controlling the device and a time for controlling the device at the pressure value.

### (Description of Item 2)

"third information" is disclosed in the "Temperature" column and the "Time" column of Fig. 3 and their related description.

"fourth information" is disclosed in the "Pressure" column and the "Time" column of Fig. 3 and their related description.

### Industrial Applicability

The present disclosure is useful when cooking a dish that can satisfy a user's taste-related preferences.

### Reference Signs List

10 control system
20 information provision system
100 cooking device
110 operation panel
111 display unit
112 input receiving unit
113 display control unit
120 processor
121 acquisition unit
122 information processing unit
123 output unit
130 storage unit
140 communication unit
150 cooking control unit
160 cooking unit
200 network
300 server
310 first database
320 second database
330 third database

## Claims

1. A control system comprising:
an acquirer that acquires dish information indicating a dish, and sensory evaluation information based on the dish information;
an information processor that acquires cooking parameter information, including one or more cooking parameters, based on the acquired dish information and sensory evaluation information; and
an outputter that outputs a control signal, including the acquired cooking parameter information, to a cooking controller that controls a cooking device,
wherein the cooking parameter information includes a cooking parameter for increasing or decreasing a sensory evaluation value corresponding to the sensory evaluation information during a cooking process performed by the cooking device.

2. The control system according to claim 1, wherein:
the one or more cooking parameters include either one or more first cooking parameters corresponding to a dish with a first sensory evaluation value, or one or more second modified cooking parameters corresponding to a dish with a second sensory evaluation value different from the first sensory evaluation value; and
the one or more second cooking parameters are such that a part or all of the one or more first cooking parameters have been modified.

3. The control system according to claim 2, wherein:
the one or more cooking parameters include second cooking parameters corresponding to a dish with the second sensory evaluation value; and
the second cooking parameters each have a different quantity of a chemical component contained in a dish with the second sensory evaluation value.

4. The control system according to claim 1 or 2, wherein:
the one or more cooking parameters include a cooking parameter for altering a chemical component related to the sensory evaluation value.

5. The control system according to claim 1 or 2, wherein:
the dish information indicates the dish in which ingredients are combined.

6. The control system according to claim 1 or 2, wherein:
the information processor further acquires information indicating at least one of a type of an ingredient, a quantity of the ingredient, or a processed state of the ingredient.

7. The control system according to claim 1 or 2, wherein: the sensory evaluation value includes at least one of sweetness, saltiness, sourness, bitterness, or umami, represented quantitatively.

8. The control system according to claim 1 or 2, wherein:
the one or more cooking parameters include at least one of a temperature parameter indicating a temperature of the cooking device or a time parameter indicating a cooking time of the cooking device.

9. The control system according to claim 1 or 2, wherein:
the one or more cooking parameters include a pressure parameter indicating a pressure of the cooking device.

10. The control system according to claim 1 or 2, wherein:
the information processor
acquires the cooking parameter information using a trained model, and
the trained model is machine-learned to take information indicating the dish and the sensory evaluation value as input, and to output the one or more cooking parameters.

11. A control method executed by a computer, comprising:
acquiring dish information indicating a dish;
acquiring sensory evaluation information based on the dish information;
acquiring cooking parameter information, including one or more cooking parameters, based on the acquired dish information and sensory evaluation information; and
outputting a control signal including the acquired cooking parameter information,
wherein the cooking parameter information includes a cooking parameter for increasing or decreasing a sensory evaluation value corresponding to the sensory evaluation information.

12. A control program causing a computer to execute:
acquiring dish information indicating a dish;
acquiring sensory evaluation information based on the dish information;
acquiring cooking parameter information, including one or more cooking parameters, based on the acquired dish information and sensory evaluation information; and
outputting a control signal including the acquired cooking parameter information,
wherein the cooking parameter information includes a cooking parameter for increasing or decreasing a sensory evaluation value corresponding to the sensory evaluation information.

13. An information provision system comprising:
a display; and
a display controller that causes the display to display a first image that receives input of dish information indicating a dish,
to display a second image that receives input of sensory evaluation information based on the input dish information, and
to display a third image that represents recipe information based on the input dish information and sensory evaluation information,
wherein the recipe information includes at least one of pre-process information related to a pre-process preceding a cooking process in a cooking device, or post-process information related to a post-process following the cooking process in the cooking device.

14. An information provision method executed by a computer, comprising:
acquiring dish information indicating a dish;
acquiring sensory evaluation information based on the dish information; and
outputting recipe information based on the acquired dish information and sensory evaluation information,
wherein the recipe information includes at least one of pre-process information related to a pre-process preceding a cooking process in a cooking device, or post-process information related to a post-process following the cooking process in the cooking device.

15. An information provision program causing a computer to execute:
acquiring dish information indicating a dish;
acquiring sensory evaluation information based on the dish information; and
outputting recipe information based on the acquired dish information and sensory evaluation information,
wherein the recipe information includes at least one of pre-process information related to a pre-process preceding a cooking process in a cooking device, or post-process information related to a post-process following the cooking process in the cooking device.
